# FASCICULE DE BREVET EUROPEEN

(11) **EP 2 907 651 B1**
(45) Date de publication et mention de la délivrance du brevet: **23.05.2018**
(21) Numéro de dépôt: 15151123.5
(22) Date de dépôt: 14.01.2015
(51) Int. Cl.: B29C 65/36, B29C 65/78, B29L 7/00, B29K 307/04, H05B 6/10, H05B 6/40

(54) **Procédé et dispositif de soudage par induction de pièces en matériaux composites**
Verfahren und Vorrichtung zum Induktionsschweißen von Bauteilen aus Verbundmaterial
Method and device for induction welding of parts made of composite materials

(30) Priorité: 18.02.2014 FR 1451293
(43) Date de publication de la demande: 19.08.2015
(73) Titulaire: AIRBUS OPERATIONS (S.A.S), 31060 Toulouse (FR)
(72) Inventeur: Chotard, Florian, 44300 Nantes (FR); Collart, Cyrille, 44000 Nantes (FR); Trichet, Didier, 44600 Saint-Nazaire (FR); Fouladgar, Javad, 44600 Saint-Nazaire (FR)
(74) Mandataire: Gicquel, Olivier Yves Gérard

(56) Documents cités:
- EP-A1- 0 387 512
- DE-U1-202007 003 450
- GB-A- 1 161 903
- US-A- 3 709 775
- US-A1- 2003 062 118

## Description

La présente invention concerne un procédé et un dispositif de soudage par induction de pièces en matériaux composites. L'invention se rapporte notamment à l'assemblage de pièces en matériaux composites dans le domaine aéronautique.

Les pièces en matériaux composites comprennent généralement des fibres de carbone noyées dans une résine, qui sont déposées, par exemple par drapage, de manière à former des plis superposés les uns aux autres. Dans chaque pli, les fibres sont alignées selon une direction principale (0°, 45°, 90°). Les plans des plis de fibres de carbone sont parallèles les uns aux autres et définissent un plan dit plan principal. De plus, les procédés de fabrication d'une telle pièce génèrent des points de contact entre les plis dont la distribution est aléatoire et dépend de la nature de la résine et de la vitesse de dépôt des fibres de carbone.

Le soudage par induction de pièces en matériaux composites thermoplastiques consiste à utiliser un inducteur émettant un champ magnétique et un élément d'interface, généralement en métal conducteur, disposé à l'interface des pièces à souder pour concentrer les champs magnétiques. Le métal conducteur est chauffé jusqu'à une température dite de procédé correspondant au moins à la température de transformation des matériaux composites provoquant le ramollissement de la structure des pièces composites afin de mixer localement les deux pièces et permettre ainsi de les souder ensemble. Les pièces à souder ensemble doivent être constituées de matériaux composites dits « compatibles », c'est-à-dire qui sont tels qu'à la température de transformation, les matériaux adhèrent l'un à l'autre.

Cependant, les inconvénients principaux de ce type de procédé sont, d'une part, la présence très localisée de métal conducteur dans le produit final, et d'autre part, la difficulté de contrôler la température du procédé.

Certains dispositifs de soudage par induction font circuler les courants induits dans le carbone des plis de surface des matériaux composites. Ces dispositifs, d'une manière générale, tendent à chauffer les parois de contact en faisant circuler des courants induits dans des matériaux paramagnétiques, tels que le carbone des fibres de carbone des matériaux composites, c'est-à-dire avec une faible sensibilité aux champs magnétiques et avec une conductivité électrique permettant de transformer la circulation des courants de Foucault en température par effet Joule. Cela implique d'appliquer des champs magnétiques intenses pour générer des courants induits dans ces matériaux. Des courants induits peuvent circuler également dans les plis qui ne sont pas à l'interface ainsi que le long des points de contact entre les plis.

Dans des pièces en matériaux composites soumises au champ magnétique d'un dispositif de soudage par induction, les courants induits circulent selon deux directions :
- la direction principale, dans les plis, le long des fibres de carbone des pièces, et
- une direction secondaire, perpendiculaire à la direction principale, entre les plis, le long de laquelle se positionnent les points de contact entre plis.

Ces procédés de soudage par circulation de courants induits sont donc difficiles à contrôler en température et en interface de soudage. En effet, il est difficile de maîtriser le champ magnétique afin de limiter son effet uniquement aux plis de carbone de surface qui sont à l'interface des deux matériaux composites à souder.

Le document EP1326741 B1 décrit une composition de matrice polymère comprenant des éléments ferromagnétiques dispersés dans une matrice polymère et un procédé permettant de générer un chauffage par hystérésis homogène dans la composition. Avec une telle matrice, le chauffage de la matrice polymère est homogène, localisé et contrôlé précisément en température.

En outre, le soudage par induction de composites thermoplastiques, notamment à hautes performances, est mis en oeuvre de façon usuelle à l'aide d'un inducteur présentant une configuration mono-faciale.

Le document US2003/0062118 décrit un laminoir utilisé pour former des structures composites laminées. Le laminoir comprend notamment une enceinte de chauffage et un dispositif à induction qui transfère de l'énergie aux fibres électriquement conductrice de la préforme composite présente dans l'enceinte.

Le document US3709775 décrit un produit comportant au moins une couche réalisée en matériau plastique thermiquement conducteur et comprenant des particules non-conductrices de courant, appartenant à la famille des oxydes magnétiques. De tels produits sont utilisés notamment pour jointer deux éléments par apport d'énergie thermique.

Le document EP0387512 décrit un dispositif pour la réalisation d'une soudure continue le long d'une jonction entre deux matériaux d'emballage stratifié en déplacement. Le dispositif comprend deux plaques métalliques allongées similaires chacune avec un évidemment comprenant un rouleau de pression. Les plaques métalliques sont disposées à une certaine distance les unes des autres et sont reliées électriquement les unes aux autres et à une source de courant alternatif.

Le document GB1161903 décrit un appareil et un procédé pour souder deux faces de deux pièces en matériaux thermoplastique. La soudure est réalisée par application de chaleur et de pression.

Le document DE202007003450 décrit un circuit résonnant comprenant deux bobines à induction configuré pour chauffer une feuille de scellement d'un récipient en déplacement, par exemple, sur un convoyeur. Les deux bobines à induction sont raccordées l'une à l'autre par des tuyaux flexibles permettant de les positionner à angle droit par rapport au déplacement du récipient. Les bobines peuvent être inclinées, mais les conducteurs à l'intérieur des bobines restent parallèles l'un de l'autre.

De tels procédés, avec ou sans métal conducteur, souffrent de plusieurs limitations qui empêchent leur industrialisation dans le domaine aéronautique.

En effet, la conception de la géométrie de l'inducteur est complexe pour des géométries de surface plane simples. Elle nécessite des simulations réclamant des ressources informatiques importantes, par exemple une forme en L nécessite quinze jours de simulation pour obtenir la forme de l'inducteur, sans garantie d'homogénéité de l'effet thermique.

Il existe, en outre, une forte sensibilité à la distance entre l'inducteur et l'élément d'interface, qui influe sur le bilan thermique à l'interface. Les champs magnétiques émis par l'inducteur sont d'abord très intenses dans son environnement proche, puis décroissent de manière exponentielle en s'éloignant de l'inducteur. Cette configuration implique une sensibilité géométrique, c'est-à-dire une tolérance de la distance entre l'inducteur et le métal, inférieure au dixième de millimètre. Dans le cas d'un inducteur de type mono-facial, cette distance agit fortement sur le bilan thermique à l'interface. Si cette distance varie, la température est trop importante ou, au contraire, pas assez importante.

Ainsi, il existe un lien étroit entre la géométrie de l'inducteur mono-facial et celles des pièces à souder. Pour chaque configuration, il est nécessaire de concevoir un inducteur différent, avec une adaptation des paramètres de soudage, tels que la fréquence, l'intensité du champ, ou l'impédance du système inductif.

La présente invention a pour objet de remédier tout ou en partie aux inconvénients de l'art antérieur. Elle concerne un procédé de soudage par induction d'au moins deux pièces en matériaux composites comprenant des fibres de carbone noyées dans une résine et orientées selon une direction principale appartenant à un plan principal, ledit procédé comprenant les étapes suivantes :
a) formation d'au moins un absorbeur de champ configuré pour absorber un champ magnétique et comprenant un matériau ferromagnétique ;
b) formation d'un ensemble comprenant les pièces à souder et l'absorbeur de champ agencé au niveau de parois de contact des pièces ; et
c) génération, pendant une durée prédéfinie, d'un champ magnétique alternatif homogène dans l'ensemble à l'aide d'un inducteur bifacial, selon une direction d'incidence, de manière à chauffer les parois de contact de l'ensemble jusqu'à une température dite de procédé.

Selon l'invention, le procédé de soudage est remarquable en ce qu'il comprend de plus, une étape d'inclinaison d'au moins l'un des éléments suivants : l'ensemble et l'inducteur bifacial, de manière à orienter la direction d'incidence du champ magnétique par rapport au plan principal selon un angle différent de 90° et différent d'un angle nul.

Ainsi, le procédé conforme à l'invention prévoit d'appliquer un champ uniforme (homogène) par l'intermédiaire d'un inducteur bifacial et non plus mono-facial. L'homogénéité des lignes de champ favorise une température uniforme sur l'ensemble des parois de contact. En outre, le procédé permet d'optimiser la prépondérance du chauffage par hystérésis sur le chauffage par courants induits, en appliquant un champ magnétique dans une direction d'incidence par rapport au plan principal selon un angle différent de 90° et différent d'un angle nul. Ceci permet de chauffer uniformément l'ensemble, notamment au niveau des parois de contact du matériau composite.

La génération de ce champ magnétique uniforme permet de s'affranchir de la géométrie de l'ensemble à souder. Il n'est, par conséquent plus nécessaire, grâce à l'invention, d'adapter l'inducteur à chaque surface ou forme de l'ensemble à souder. Ce procédé peut donc être utilisé quels que soient la forme et le profil des pièces à souder.

La présente invention peut présenter différents modes de réalisation, qui peuvent être pris en combinaison ou séparément :
- le procédé comprend une étape d'application d'une pression de contact sur l'ensemble,
- le procédé comprend une étape supplémentaire, postérieure à l'étape c) et consistant à refroidir l'ensemble en maintenant la pression de contact, après un arrêt de la génération du champ magnétique dans l'ensemble,
- la température de procédé est définie entre une température de transformation de la résine et une température supérieure à cette température de transformation de la résine d'au moins 50°C,
- à l'étape c), l'ensemble est déplacé par rapport à l'inducteur bifacial suivant une vitesse de déplacement, la durée de génération du champ magnétique dans l'ensemble étant contrôlée en fonction de la vitesse de déplacement.

La présente invention se rapporte également à un élément composite comprenant au moins deux pièces en matériaux composites soudées l'une à l'autre par le procédé précité.

La présente invention se rapporte en outre à un dispositif de soudage par induction d'au moins deux pièces en matériaux composites comprenant des fibres de carbone noyées dans une résine et orientées selon une direction principale appartenant à un plan principal, le dispositif comportant au moins une unité de chauffage pourvue d'au moins un inducteur bifacial comprenant deux parois espacées entre elles et réparties de part et d'autre d'un support sur lequel est disposé, en utilisation, un ensemble comprenant les pièces à souder et un absorbeur de champ, l'absorbeur de champ étant configuré pour absorber un champ magnétique et comprenant un matériau ferromagnétique, l'absorbeur de champ étant agencé au niveau de parois de contact des deux pièces, de manière à les chauffer à une température dite de procédé, le dispositif comportant, également, des moyens de génération et des moyens d'adaptation d'un courant alternatif destinés en utilisation à générer un champ magnétique homogène entre les deux parois de l'inducteur bifacial.

Selon l'invention, ce dispositif comprend, de plus, des moyens d'inclinaison d'au moins l'un des éléments suivants : l'ensemble et l'inducteur bifacial, de manière à orienter la direction d'incidence du champ magnétique par rapport au plan principal selon un angle différent de 90° et différent d'un angle nul.

Ledit absorbeur de champ peut être réalisé de différentes manières. En particulier, il peut comprendre :
- une grille ferromagnétique noyée dans un film de matériau composite compatible avec ceux des pièces à souder, et formant un élément d'interface,
- des particules ferromagnétiques noyées dans un film de matériau composite compatible avec ceux des pièces à souder, et formant un élément d'interface,
- des particules ferromagnétiques noyées dans la paroi de contact d'au moins l'une desdites pièces.

Dans un mode de réalisation préféré, chaque paroi de l'inducteur bifacial comprend une bobine de Helmholtz.

Les figures annexées feront bien comprendre comment l'invention peut être réalisée. Sur ces figures, des références identiques désignent des éléments semblables.
La figure 1 est une vue schématique en perspective d'un mode de réalisation particulier d'un dispositif de soudage illustrant l'invention, et
La figure 2 montre schématiquement une vue de côté du dispositif de soudage de la figure 1.

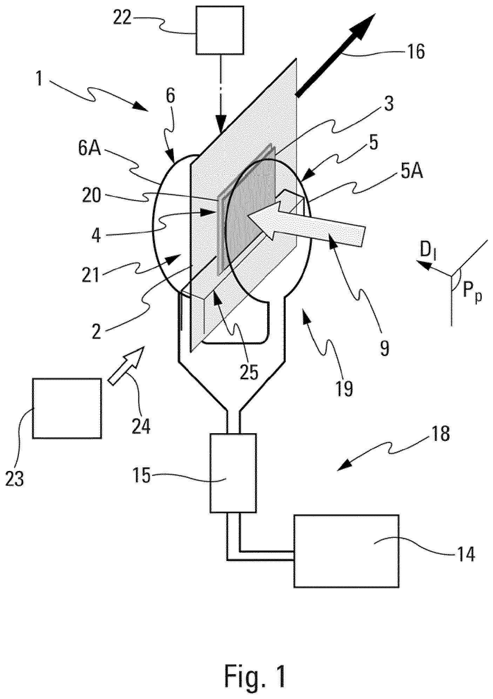

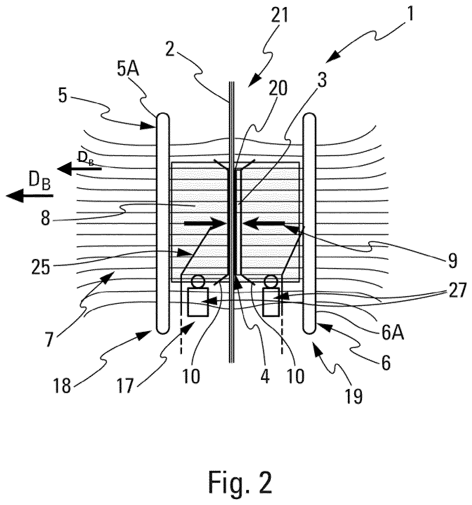

Le dispositif de soudage 1, représenté sur les figures 1 et 2, est destiné à souder de façon rapide des pièces 2, 3 en matériaux composites thermoplastiques compatibles (à fibres continues ou à fibres longues, courtes ou sans renfort), tels qu'une peau et un pied de clip par exemple. Les pièces 2, 3 comprennent des fibres de carbone alignées selon une direction principale D_{P} et noyées dans une résine, les fibres formant des plis parallèles à un plan dit plan principal P_{P}. Ce plan principal P_{P} est perpendiculaire à une direction secondaire Di, le long de laquelle peuvent se positionner des points de contact entre plis lors de la fabrication des pièces 2, 3. Pour ce faire, le dispositif 1 comprend notamment un support 25, une unité de génération de pression 17 et une unité de chauffage 18.

L'unité de chauffage 18 comprend un inducteur bifacial 19 et est configurée pour générer un champ magnétique 7 alternatif homogène dans un ensemble 21 comprenant les deux pièces 2 et 3 et un absorbeur de champ 4, comme représenté sur la figure 2, pendant une durée prédéfinie.

L'invention n'est cependant pas limitée au soudage de deux pièces, et pourrait être appliquée à plusieurs pièces à assembler ensemble, un absorbeur de champ étant alors disposé entre chaque pièce.

Comme représenté sur la figure 1, l'unité de chauffage 18 comprend en plus de l'inducteur bifacial 19, un générateur de courant électrique alternatif 14, et des moyens 15 d'adaptation de ce courant. Dans les modes de réalisation représentés, l'inducteur bifacial 19 comprend deux parois 5, 6 parallèles, espacées entre elles et formant respectivement une paire de bobines de Helmholtz qui sont reliées aux moyens 15 et qui génèrent un champ magnétique alternatif homogène entre les bobines. Chaque bobine de Helmholtz comprend au moins une spire circulaire 5A, 6A de rayon défini, les deux bobines étant sensiblement identiques. Un courant électrique circulant dans la spire produit un champ magnétique, selon une direction d'incidence D_{B}, représentée sur la figure 2 par des lignes de champ 7 perpendiculaires au plan des spires 5A, 6A. Les deux bobines sont agencées parallèlement, à une distance l'une de l'autre sensiblement égale à leur rayon. Ainsi, un champ magnétique homogène est obtenu sur une zone circulaire.

Alternativement, les bobines de Helmholtz peuvent comprendre plusieurs spires 5A, 6A activables indépendamment les unes des autres, afin d'adapter la puissance du champ magnétique aux types de matériaux composites à souder.

Comme illustré sur la figure 2, le dispositif de soudage 1 comprend, de plus, des moyens d'inclinaison 27 du support 25 destinés à orienter les pièces 2,3. Par exemple, les moyens d'inclinaison 27 comprennent un ensemble d'au moins trois vérins pneumatiques situés sous des côtés du support 25. Ainsi, par un jeu de mouvements différents d'un vérin à l'autre, les pièces 2,3 peuvent être inclinées selon au moins trois axes afin qu'un angle entre la direction d'incidence D_{B} du champ magnétique 7 et le plan principal P_{P} des plis des fibres de carbone soit :
- différent de 90°, afin de limiter un chauffage par circulation de courants induits le long de la direction principale D_{P} des fibres de carbone ; et
- différent de 0°, afin de limiter un chauffage par circulation de courants induits, sur les points de contacts entre plis, le long de la direction secondaire Di.

Les moyens d'inclinaison 27 peuvent également être appliqués à l'inducteur bifacial 19. Dans cette variante de réalisation (non représentée), les deux parois 5, 6 de l'inducteur bifacial 19 sont orientées alors que le support 25, sur lequel l'ensemble 21 est disposé, reste fixe. Dans une autre variante non représentée, les moyens d'inclinaison 27 peuvent comporter des premiers éléments d'inclinaison appliqués à l'inducteur bifacial 19 et des seconds éléments d'inclinaison appliqués à l'ensemble 21.

Pour souder deux pièces 2 et 3 en matériaux composites compatibles, un absorbeur de champ 4 est donc agencé à l'interface des deux pièces 2 et 3. L'absorbeur de champ 4 est configuré pour absorber le champ magnétique 7 émis par les bobines de Helmholtz. L'absorbeur de champ 4 est, par exemple, une résine polymère chargée en particules ferromagnétiques, telle que décrite dans le brevet EP1326741 B1. L'absorbeur de champ 4 comprend un matériau ferromagnétique (sous forme d'une grille ou sous forme de particules ferromagnétiques) dont la perméabilité magnétique relative est plus élevée que la perméabilité magnétique de la résine utilisée et que celle du carbone des fibres (perméabilité magnétique relative µ < 2 T.m.A⁻¹), par exemple de la poudre de fer (perméabilité magnétique relative µ = 250 T.m.A⁻¹ et température de Curie = 770°).

Dans un premier mode de réalisation, la grille ou les particules ferromagnétiques sont noyées dans un film de résine compatible avec ceux des deux pièces 2 et 3, et forment un élément d'interface 20 disposé entre les parois de contact des deux pièces 2 et 3, afin que le soudage s'effectue lors de la transformation des matériaux composites.

Selon un autre mode de réalisation, les particules ferromagnétiques sont mélangées avec la résine du matériau composite sur la paroi de contact d'au moins l'une des pièces 2 et 3 au moment de la fabrication des pièces 2 et 3. Le matériau ferromagnétique se présente sous forme de particules ferromagnétiques sphériques noyées dans la résine, par exemple du polysulfone (PSU), avec des fractions volumiques allant de 10% à 20%. Le diamètre des particules ferromagnétiques est faible (entre 22 microns et 300 microns). L'homogénéité du mélange résine-particules est fonction du grade de la résine, de la granulométrie des particules de matériau ferromagnétique ainsi que de l'imprégnation entre la résine et les fibres de carbone (qualité de l'interface fibre/résine, viscosité de la résine, taux de porosité). Cet autre mode de réalisation permet de mettre directement en contact les deux pièces 2 et 3, sans avoir à prévoir pour le soudage un élément d'interface (tel que l'élément d'interface 20) contenant le matériau ferromagnétique entre les pièces 2 et 3.

Les deux pièces 2 et 3, ainsi que l'absorbeur de champ 4 (intégré dans l'une des pièces 2 et 3 ou dans un élément d'interface 20), forment un ensemble 21 qui est maintenu par une pression de contact, représentée par une ou des flèches 9 sur les figures 1 et 2, exercée par l'unité de génération de pression 17, au moyen d'éléments 10 d'application de pression. La pression de contact est dirigée de sorte que les pièces 2 et 3 sont pressées l'une contre l'autre.

L'ensemble 21, placé dans l'espace entre les bobines, subit l'effet du champ magnétique émis par les bobines, la grille en matériau ferromagnétique ou les particules ferromagnétiques produisant en particulier de la chaleur. Ainsi, l'absorbeur de champ 4 chauffe de façon homogène l'interface entre les deux pièces 2 et 3, grâce au champ magnétique uniformément réparti dans la zone 8 où est placé l'ensemble 21.

Dans le cas du chauffage par hystérésis, l'homogénéité de la réponse thermique dans la surface est obtenue grâce à la régularité de la distribution surfacique des particules de matériau ferromagnétique (dans l'une des pièces 2 et 3 ou dans l'élément d'interface 20). L'incidence de la surface par rapport au champ et la forme de la surface à souder ne présentent pas d'impact sur la distribution thermique. Ce procédé est contraint, notamment, par la taille des particules ferromagnétiques, leur nature, l'intensité du champ magnétique 7 et sa fréquence.

Pour garantir des niveaux de température appropriés à l'interface des pièces 2 et 3, on utilise un matériau ferromagnétique ayant comme caractéristique une température de Curie adaptée aux résines utilisées. Ainsi, le matériau ferromagnétique est choisi tel que sa température de Curie soit identique à une température définie, appelée "température de procédé", correspondant par exemple à la température de transformation de la résine augmentée d'une valeur de 0° à 50° selon la géométrie des pièces à souder. La température de Curie correspond à la température à laquelle le matériau ferromagnétique devient paramagnétique et perd, notamment, ses propriétés de conductions thermique et électrique. La température de transformation dépend de la nature de la résine et est, par exemple :
- soit la température de surfusion dans le cas où la résine des pièces 2, 3 est en matériau semi-cristallin ;
- soit la température de fusion (ou température de début de "ramollissement") dans le cas où la résine des pièces 2, 3 est en matériau amorphe ;
- soit la température de polymérisation dans le cas où la résine des pièces 2, 3 est en matériau thermodurcissable.

Par exemple, dans le cas de fibres de carbone noyées dans une résine de polyétheréthercétone (désigné par PEEK), le matériau ferromagnétique utilisé peut être du NiFe5.

La température de Curie est la température à laquelle le matériau ferromagnétique devient paramagnétique. Ce matériau ferromagnétique présente une sensibilité au champ magnétique 7 beaucoup plus importante que le matériau composite à souder. La conductivité, ainsi que la perméabilité magnétique des matériaux ferromagnétiques, évoluent en fonction de la température. A fréquence de champ magnétique fixe, la permittivité électrique des matériaux évolue également en fonction de la température et atteint un seuil au-delà duquel elle n'évolue plus.

Par conséquent, l'application d'un champ magnétique 7 permet d'augmenter la température de l'ensemble 21 jusqu'à la température de Curie, à laquelle le matériau ferromagnétique perd son aimantation et se stabilise en température, ce qui permet d'obtenir une température de chauffage constante. La température du matériau ferromagnétique soumis à un champ magnétique suit un cycle d'hystérésis. Ces caractéristiques permettent donc de définir une fenêtre autour d'une température caractéristique du matériau ferromagnétique. En adaptant les paramètres inductifs tels que la fréquence du courant alternatif et la puissance injectée par le générateur 14, associés à une configuration de champ homogène, on génère un chauffage homogène à l'interface à un niveau de température maîtrisé et reproductible.

On évite ainsi les variations de température sur les parois de contact, car le champ appliqué est homogène et agit sur le matériau ferromagnétique qui a un point de Curie spécifique correspondant à la température de transformation des matériaux composites.

L'homogénéité du champ électromagnétique est en outre garantie par la géométrie de l'inducteur. Dans une bobine de Helmholtz, le champ est homogène dans la partie centrale (zone 8), sur un diamètre sensiblement équivalent au rayon des spires 5A, 6A.

Dans le cas où les deux matériaux composites sont de natures différentes, on choisit la température de transformation la plus élevée des deux, afin que les deux matériaux soient transformés ensemble.

Le champ magnétique 7 est maintenu pendant un temps défini afin d'obtenir une transformation suffisante des parois de contact. Une fois que le champ magnétique 7 est arrêté, l'ensemble 21 est maintenu en contact par les éléments 10 d'application de la pression de contact jusqu'à ce qu'il ait suffisamment refroidi.

Ainsi, le dispositif 1 comprend, de plus, des moyens de refroidissement 23 (figure 1). Dans un mode de réalisation préféré, les moyens de refroidissement 23 comprennent un ensemble de canaux de circulation d'un fluide, tel que de l'eau ou de l'air, sur l'ensemble 21, comme illustré par une flèche 24 sur la figure 1. Le refroidissement est atteint lorsque la température de l'ensemble 21 est redescendue en-dessous de la température de cristallisation des matériaux composites. Dans ce cas, le soudage entre les deux pièces 2 et 3 en matériaux composites est réalisé et la pression de contact, devenue inutile, est stoppée.

Dans un premier mode de réalisation de l'invention, l'ensemble 21 est maintenu immobile pendant le soudage dans l'inducteur bifacial 19.

En outre, dans un second mode de réalisation de l'invention, le dispositif 1 comprend, de plus, des moyens de déplacement 22, qui sont aptes à déplacer l'ensemble 21 entre les bobines, comme représenté par une flèche 16 sur la figure 3. L'ensemble 21 est soumis à une translation dans la zone 8 où le champ magnétique 7 est homogène. La vitesse de déplacement de l'ensemble 21 (générée par les moyens de déplacement 22) est réglée de sorte que le temps d'exposition au champ magnétique 7 (entre les bobines) est suffisant pour atteindre la température de transformation des matériaux composites, et obtenir ainsi le soudage des pièces 2 et 3.

Dans ce second mode de réalisation, une ligne de production permet de produire les pièces 2 et 3 assemblées en les faisant circuler dans un montage entre les deux bobines.

Le champ magnétique 7 est appliqué avec des paramètres définis en fonction de la nature du matériau ferromagnétique, de la granulométrie des particules ou de la grille. Dans un mode de réalisation préféré, les fréquences sont élevées (de l'ordre du MHz), ainsi que les puissances (le champ magnétique 7 est supérieur à 5 000 A/m). De hautes fréquences (de 1 MHz à 10 MHz) assurent le chauffage de multiples domaines magnétiques dans les particules qui sont favorables à l'effet d'hystérésis. En outre, un champ magnétique élevé, supérieur à 5000 A/m, permet de mieux contrôler le chauffage grâce à la température de Curie. De plus, ces paramètres inductifs initient un chauffage par hystérésis et limitent un chauffage par circulation de courants induits.

On notera que le dispositif selon l'invention permet de souder des géométries complexes de forme simple ou présentant une double courbure, ou bien qui comprennent des variations d'épaisseur.

## Revendications

1. Procédé de soudage par induction d'au moins deux pièces (2, 3) en matériaux composites comprenant des fibres de carbone noyées dans une résine et orientées selon une direction principale appartenant à un plan principal (P_{P}), ledit procédé comprenant les étapes suivantes :
a) formation d'au moins un absorbeur de champ (4) configuré pour absorber un champ magnétique (7) et comprenant un matériau ferromagnétique ;
b) formation d'un ensemble (21) comprenant les pièces (2, 3) à souder et ledit au moins un absorbeur de champ (4) agencé au niveau de parois de contact des pièces (2, 3) ; et
c) génération, pendant une durée prédéfinie, d'un champ magnétique (7) alternatif homogène dans l'ensemble (21) à l'aide d'un inducteur bifacial (19), selon une direction d'incidence (D_{B}), de manière à chauffer les parois de contact de l'ensemble jusqu'à une température dite de procédé,
**caractérisé en ce que** le procédé comprend de plus, une étape d'inclinaison d'au moins l'un des éléments suivants : l'ensemble (21) et l'inducteur bifacial (19), de manière à orienter la direction d'incidence (D_{B}) du champ magnétique (7) par rapport au plan principal (P_{P}) selon un angle différent de 90° et différent d'un angle nul.

2. Procédé selon la revendication 1,
**caractérisé en ce qu'**il comprend une étape d'application d'une pression de contact (9) sur l'ensemble (21).

3. Procédé selon la revendication 2,
**caractérisé en ce qu'**il comprend une étape supplémentaire, postérieure à l'étape c) et consistant à refroidir l'ensemble (21) en maintenant la pression de contact (9), après un arrêt de la génération du champ magnétique (7) dans l'ensemble (21).

4. Procédé selon l'une quelconque des revendications précédentes, **caractérisé en ce que** la température de procédé est définie entre une température de transformation de la résine et une température supérieure à cette température de transformation de la résine d'au moins 50°C.

5. Procédé selon l'une quelconque des revendications précédentes, **caractérisé en ce qu'**à l'étape c), l'ensemble (21) est déplacé par rapport à l'inducteur bifacial (19) suivant une vitesse de déplacement, la durée de génération du champ magnétique (7) dans l'ensemble (21) étant contrôlée en fonction de la vitesse de déplacement.

6. Dispositif de soudage par induction d'au moins deux pièces (2, 3) en matériaux composites comprenant des fibres de carbone noyées dans une résine et orientées selon une direction principale appartenant à un plan principal (Pp), le dispositif (1) comportant au moins une unité de chauffage (18) pourvue d'au moins un inducteur bifacial (19) comprenant deux parois (5, 6) espacées entre elles et réparties de part et d'autre d'un support (25) sur lequel est disposé, en utilisation, un ensemble (21) comprenant les pièces (2, 3) à souder et un absorbeur de champ (4), l'absorbeur de champ (4) étant configuré pour absorber un champ magnétique (7) et comprenant un matériau ferromagnétique, l'absorbeur de champ (4) étant agencé au niveau de parois de contact des deux pièces (2, 3) à souder, de manière à les chauffer à une température dite de procédé, le dispositif (1) comportant, également, des moyens de génération (16) et des moyens d'adaptation (15) d'un courant alternatif destinés en utilisation à générer un champ magnétique (7) homogène entre les deux parois (5, 6) de l'inducteur bifacial (19),
**caractérisé en ce que** le dispositif (1) comprend, de plus, des moyens d'inclinaison (27) d'au moins l'un des éléments suivants : l'ensemble (21) et l'inducteur bifacial (19), de manière à orienter la direction d'incidence (D_{B}) du champ magnétique (7) par rapport au plan principal (Pp) selon un angle différent de 90° et différent d'un angle nul.

7. Dispositif selon la revendication 6,
**caractérisé en ce que** chaque paroi de l'inducteur bifacial (19) comprend une bobine de Helmholtz.

8. Dispositif selon l'une des revendications 6 et 7,
**caractérisé en ce que** l'absorbeur de champ (4) comprend une grille ferromagnétique noyée dans un film de matériau composite compatible avec ceux des pièces (2, 3) à souder, et formant un élément d'interface (20).

9. Dispositif selon l'une des revendications 6 et 7,
**caractérisé en ce que** l'absorbeur de champ (4) comprend des particules ferromagnétiques noyées dans un film de matériau composite compatible avec ceux des pièces (2, 3) à souder, et formant un élément d'interface (20).

10. Dispositif selon l'une des revendications 6 et 7,
**caractérisé en ce que** l'absorbeur de champ (4) comprend des particules ferromagnétiques noyées dans la paroi de contact d'au moins l'une desdites pièces (2, 3).

## Patentansprüche

1. Verfahren zum Induktionsschweißen von mindestens zwei Teilen (2, 3) aus Verbundmaterialien umfassend Kohlenstofffasern, die in ein Harz eingebettet sind und gemäß einer Hauptrichtung orientiert sind, die zu einer Hauptebene (P_{P}) gehört, das Verfahren umfassend die folgenden Schritte:
a) Bilden mindestens eines Feldabsorbers (4), der ausgelegt ist, ein Magnetfeld (7) zu absorbieren, und ein ferromagnetisches Material umfasst;
b) Bilden einer Anordnung (21) umfassend die zu schweißenden Teile (2, 3) und den mindestens einen Feldabsorber (4), der an den Kontaktwänden der Teile (2, 3) angeordnet ist; und
c) Erzeugen, während einer vorgegebenen Dauer, eines homogenen wechselnden Magnetfelds (7) in der Anordnung (21) mithilfe eines bifazialen Induktors (19) gemäß einer Einfallrichtung (D_{B}), um die Kontaktwände der Anordnung bis auf eine Verfahrenstemperatur zu erhitzen,
**dadurch gekennzeichnet, dass** das Verfahren außerdem einen Schritt des Neigens mindestens eines der folgenden Elemente umfasst: der Anordnung (21) und des bifazialen Induktors (19), um die Einfallrichtung (D_{B}) des Magnetfelds (7) bezogen auf die Hauptebene (P_{P}) gemäß einem Winkel zu orientieren, der sich von 90° und von einem Nullwinkel unterscheidet.

2. Verfahren nach Anspruch 1,
**dadurch gekennzeichnet, dass** es einen Schritt des Ausübens eines Kontaktdrucks (9) auf die Anordnung (21) umfasst.

3. Verfahren nach Anspruch 2,
**dadurch gekennzeichnet, dass** es einen zusätzlichen Schritt umfasst, der nach dem Schritt c) erfolgt und in dem Kühlen der Anordnung (21) durch Beibehalten des Kontaktdrucks (9) nach einem Stopp des Erzeugens des Magnetfelds (7) in der Anordnung (21) besteht.

4. Verfahren nach einem der vorhergehenden Ansprüche,
**dadurch gekennzeichnet, dass** die Verfahrenstemperatur zwischen einer Verarbeitungstemperatur des Harzes und einer Temperatur, die um mindestens 50°C über dieser Verarbeitungstemperatur des Harzes liegt, festgelegt ist.

5. Verfahren nach einem der vorhergehenden Ansprüche,
**dadurch gekennzeichnet, dass** im Schritt c) die Anordnung (21) bezogen auf den bifazialen Induktor (19) gemäß einer Bewegungsgeschwindigkeit bewegt wird, wobei die Erzeugungsdauer des Magnetfelds (7) in der Anordnung (21) in Abhängigkeit von der Bewegungsgeschwindigkeit gesteuert wird.

6. Vorrichtung zum Induktionsschweißen von mindestens zwei Teilen (2, 3) aus Verbundmaterialien umfassend Kohlenstofffasern, die in ein Harz eingebettet sind und gemäß einer Hauptrichtung orientiert sind, die zu einer Hauptebene (P_{P}) gehört, die Vorrichtung (1) umfassend mindestens eine Heizeinheit (18), die mit mindestens einem bifazialen Induktor (19) versehen ist, der zwei Wände (5, 6) umfasst, die voneinander beabstandet sind und beiderseits eines Trägers (25) verteilt sind, auf dem im Gebrauch eine Anordnung (21) angeordnet ist, die die zu schweißenden Teile (2, 3) und einen Feldabsorber (4) umfasst, wobei der Feldabsorber (4) ausgelegt ist, ein Magnetfeld (7) zu absorbieren und ein ferromagnetisches Material umfasst, wobei der Feldabsorber (4) an Kontaktwänden der zwei zu schweißenden Teile (2, 3) angeordnet ist, um sie auf eine Verfahrenstemperatur zu erhitzen, die Vorrichtung (1) ebenfalls umfassend Mittel zur Erzeugung (16) und Mittel zur Anpassung (15) eines Wechselstroms, die dazu bestimmt sind, im Gebrauch ein homogenes Magnetfeld (7) zwischen den zwei Wänden (5, 6) des bifazialen Induktors (19) zu erzeugen, **dadurch gekennzeichnet, dass** die Vorrichtung (1) außerdem Mittel zum Neigen (27) mindestens eines der folgenden Elemente umfasst: der Anordnung (21) und des bifazialen Induktors (19), um die Einfallrichtung (D_{B}) des Magnetfelds (7) bezogen auf die Hauptebene (P_{P}) gemäß einem Winkel zu orientieren, der sich von 90° und von einem Nullwinkel unterscheidet.

7. Vorrichtung nach Anspruch 6,
**dadurch gekennzeichnet, dass** jede Wand des bifazialen Induktors (19) eine Helmholtz-Spule umfasst.

8. Vorrichtung nach einem der Ansprüche 6 und 7,
**dadurch gekennzeichnet, dass** der Feldabsorber (4) ein ferromagnetisches Gitter umfasst, das in einen Film aus Verbundmaterial eingebettet ist, das mit jenen der zu schweißenden Teile (2, 3) kompatibel ist, und ein Schnittstellenelement (20) bildet.

9. Vorrichtung nach einem der Ansprüche 6 und 7,
**dadurch gekennzeichnet, dass** der Feldabsorber (4) ferromagnetische Teilchen umfasst, die in einen Film aus Verbundmaterial eingebettet sind, das mit jenen der zu schweißenden Teile (2, 3) kompatibel ist, und ein Schnittstellenelement (20) bilden.

10. Vorrichtung nach einem der Ansprüche 6 und 7,
**dadurch gekennzeichnet, dass** der Feldabsorber (4) ferromagnetische Teilchen umfasst, die in der Kontaktwand mindestens eines der Teile (2, 3) eingebettet sind.

## Claims

1. Induction welding process for at least two parts (2, 3) made of composite materials comprising carbon fibers embedded in a resin and oriented in a main direction belonging to a principle plane (P_{P}), said process comprising the following stages:
a) formation of at least one field absorber (4) configured to absorb a magnetic field (7) and comprising a ferromagnetic material;
b) formation of an assembly (21) comprising the parts (2, 3) to be welded and the aforementioned at least one field absorber (4) arranged at the contact walls of the parts (2, 3); and
c) generation over a predefined period of a uniform alternating magnetic field (7) in the assembly (21) with the help of a two-sided inductor (19), in a direction of incidence (D_{B}), so as to heat the contact walls of the assembly up to a temperature referred to as the process temperature,
**characterized in that** the process further comprises a tilting stage of at least one of the following elements: the assembly (21) and the two-sided inductor (19), so as to orient the direction of incidence (D_{B}) of the magnetic field (7) in relation to the principle plane (P_{P}) at an angle other than 90° and other than zero.

2. Process according to Claim 1,
**characterized in that** it comprises an application stage of a contact pressure (9) on the assembly (21).

3. Process according to Claim 2,
**characterized in that** it comprises an additional stage, subsequent to stage c) and involving cooling the assembly (21) and maintaining the contact pressure (9), after the generation of the magnetic field (7) in the assembly (21) has been stopped.

4. Process according to any one of the preceding claims,
**characterized in that** the process temperature is defined between a transformation temperature of the resin and a temperature above this resin transformation temperature of at least 50°C.

5. Process according to any one of the preceding claims,
**characterized in that** at stage c), the assembly (21) is moved relative to the two-sided inductor (19) following a displacement speed, the generation time of the magnetic field (7) in the assembly (21) being controlled according to the displacement speed.

6. Induction welding device for at least two parts (2, 3) made of composite materials comprising carbon fibers embedded in a resin and oriented in a main direction belonging to a principle plane (P_{P}), said device (1) comprising at least one heating unit (18) provided with at least one two-sided inductor (19) comprising two walls (5, 6) spaced apart from one another and distributed on both sides of a support (25), on which is disposed, in normal use, an assembly (21) comprising the parts (2, 3) to be welded and a field absorber (4), the field absorber (4) being configured to absorb a magnetic field (7) and comprising a ferromagnetic material, said field absorber (4) being arranged at the contact walls of the two parts (2, 3) to be welded, so as to heat them to what is referred to as the process temperature, the device (1) likewise comprising means of generation (16) and means of adaptation (15) of an alternating current intended for use in generating a uniform magnetic field (7) between the two walls (5, 6) of the two-sided inductor (19),
**characterized in that** the device (1) further comprises means of tilting (27) at least one of the following elements: the assembly (21) and the two-sided inductor (19), so as to orient the direction of incidence (D_{B}) of the magnetic field (7) in relation to the principle plane (P_{P}) at an angle other than 90° and other than zero.

7. Device according to Claim 6,
**characterized in that** each wall of the two-sided inductor (19) comprises a Helmholtz coil.

8. Device according to one of Claims 6 and 7,
**characterized in that** the field absorber (4) comprises a ferromagnetic grate embedded in a film of composite material compatible with those of the parts (2, 3) to be welded and forming an interface element (20).

9. Device according to one of Claims 6 and 7,
**characterized in that** the field absorber (4) comprises ferromagnetic particles embedded in a film of composite material compatible with those of the parts (2, 3) to be welded and forming an interface element (20).

10. Device according to one of Claims 6 and 7,
**characterized in that** the field absorber (4) comprises ferromagnetic particles embedded in the contact wall of at least one of said parts (2, 3).
